# EUROPEAN PATENT SPECIFICATION

(11) **EP 4 306 187 B1**
(45) Date of publication and mention of the grant of the patent: **22.07.2026**
(21) Application number: 22767071.8
(22) Date of filing: 07.03.2022
(51) Int. Cl.: B62K 5/10, B62K 3/00, B62K 5/027, B62K 5/06, B62J 25/04, A63C 17/12, B62J 43/23, B62K 15/00, B62H 1/00, B62J 50/10

(54) **VEHICLE**
FAHRZEUG
VÉHICULE

(30) Priority: 12.03.2021 JP 2021040727
(43) Date of publication of application: 17.01.2024
(73) Proprietor: Striemo Inc., Tokyo 131-0041 (JP)
(72) Inventor: MORI Yotaro, Tokyo 131-0041 (JP)
(74) Representative: Weickmann & Weickmann PartmbB
(86) International application number: PCT/JP2022/009657
(87) International publication number: WO 2022/191115

(56) References cited:
- WO-A1-2020/160406
- WO-A1-2020/204869
- WO-A2-2008/143479
- WO-A2-2010/117211
- WO-A2-98/46474
- CN-A- 1 597 431
- GB-A- 2 560 740
- JP-A- 2004 243 949
- JP-U- S5 931 590
- JP-U- S55 144 190
- US-A- 3 605 929
- US-A1- 2015 054 252

## Description

### TECHNICAL FIELD

This invention relates to a three-wheeled vehicle including a single front wheel and a pair of left and right rear wheels, and formed such that a user can ride in a standing posture.

### BACKGROUND ART

Conventionally, there is a known electrically powered three-wheeled vehicle having a single front wheel and a pair of left and right rear wheels (for example, see Patent Literature 1). The vehicle described in Patent Literature 1 is equipped with a pair of left and right steps on which legs of an occupant in a standing posture are arranged inside the left and right rear wheels, and a handle above the front wheel to steer the front wheel, and the rear wheels are driven by an electric motor to drive the vehicle.

### CITATION LIST

### PATENT LITERATURE

Patent Literature 1: Japanese Unexamined Patent Publication No. 8-310254 WO 2020/204869 A1 discloses an electric scooter made with an electric drive (motor wheel) installed in the front wheel of the scooter. The front wheel becomes a traction wheel and improves the dynamic characteristics of the scooter. Said WO 2020/204869 A1 discloses a vehicle with the features of the preamble of claim 1.
WO 98/46474 A2 discloses a scooter having a platform constructed to support a ride thereupon. The scooter includes a front wheel, two rear wheels and a graspable steering handle. The front wheel is steerable and rotatable about a front axle connected to the platform. A steering handle is attached to this front axle, for steering the axle, and is adapted to be tilted (for example, when the rider leans during the turns). The platform remains substantially parallel to the road surface as the steering handle is tilted.
WO 2010/117211 A2 discloses a kickboard which comes close to the ground by twisting of a twisting section of a horizontal frame by a tilted steering unit. The kickboard thereby controls the steering and centrifugal force during riding, and simultaneously generates a driving force. The kickboard includes a steering unit comprising a front wheel, a vertical frame connected to the front wheel, and a handle unit supported by the vertical frame.
WO 2008/143479 A2 discloses a bicycle, which can be driven by an electric motor and also by an operation of a steering wheel. Specifically, the bicycle can be driven by pulling or pushing the steering wheel in the front or the back direction, which allows the front wheel to be more smoothly rotated. This further allows the bicycle to be more readily driven during a curved track.

### DISCLOSURE OF INVENTION

### PROBLEMS TO BE SOLVED BY THE INVENTION

However, since the vehicle described in Patent Literature 1 has the pair of left and right steps, the number of components increases, which leads to an increase in cost.

### MEANS FOR SOLVING PROBLEM

The present invention provides a vehicle according to the subject matter of independent claim 1.

### EFFECT OF THE INVENTION

According to the present invention, it is possible to reduce the number of components included in a vehicle and suppress an increase in a cost.

### BRIEF DESCRIPTION OF THE DRAWINGS

FIG. 1 is a side view illustrating an overall configuration of a vehicle according to an embodiment of the present invention;
FIG. 2 is a plan view illustrating the overall configuration of the vehicle according to the embodiment of the present invention;
FIG. 3 is a plan view illustrating the vehicle in which a part in FIG. 2 is omitted;
FIG. 4 is a cross-sectional view taken along line IV-IV of FIG. 3;
FIG. 5 is a cross-sectional view taken along line V-V of FIG. 1;
FIG. 6 is a view schematically illustrating a state seen from behind of the vehicle according to the embodiment of the present invention;
FIG. 7A is a view illustrating an operation of a posture change of the vehicle according to the embodiment of the present invention;
FIG. 7B is a view illustrating an operation of the posture change of the vehicle according to the embodiment of the present invention and illustrating an operation following the operation in FIG. 7A;
FIG. 7C is a view illustrating an operation of the posture change of the vehicle according to the embodiment of the present invention and illustrating an operation following the operation in FIG. 7B;
FIG. 7D is a view illustrating an operation of the posture change of the vehicle according to the embodiment of the present invention and illustrating an operation following the operation in FIG. 7C;
FIG. 8 is a view illustrating a not-claimed modification of FIG. 3;
FIG. 9 is a cross-sectional view taken along line IX-IX of FIG. 8; and
FIG. 10 is a plan view illustrating schematically an arrangement of feet on a step of an occupant while riding on the vehicle according to the embodiment of the present invention.

### DESCRIPTION OF EMBODIMENT

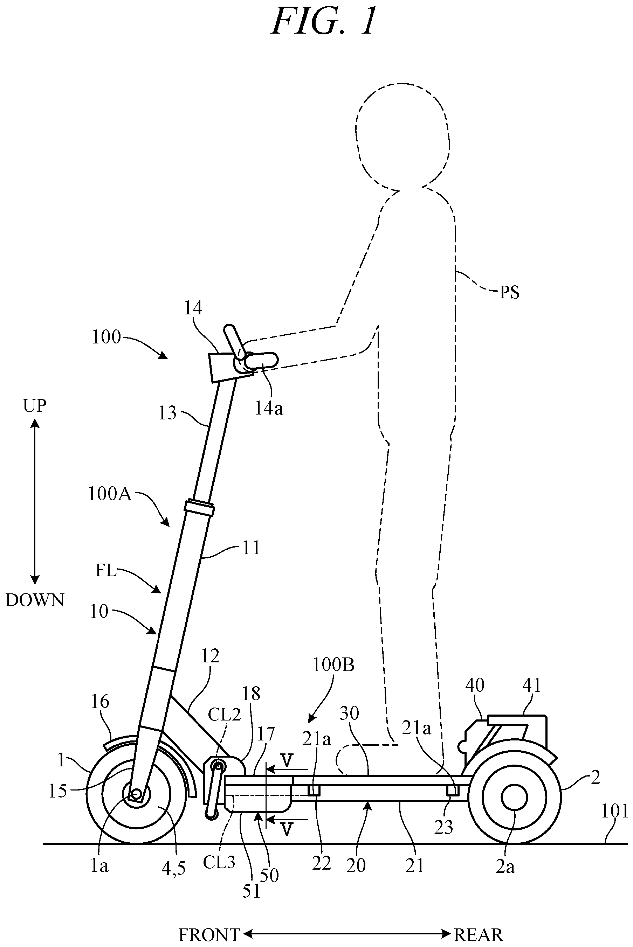

Now, an embodiment of the present invention will be described with reference to FIGs. 1 to 7D and 10. A vehicle according to the embodiment of the present invention is a three-wheeled vehicle including a single front wheel and a pair of left and right rear wheels, and is formed such that a user can ride in a standing posture.

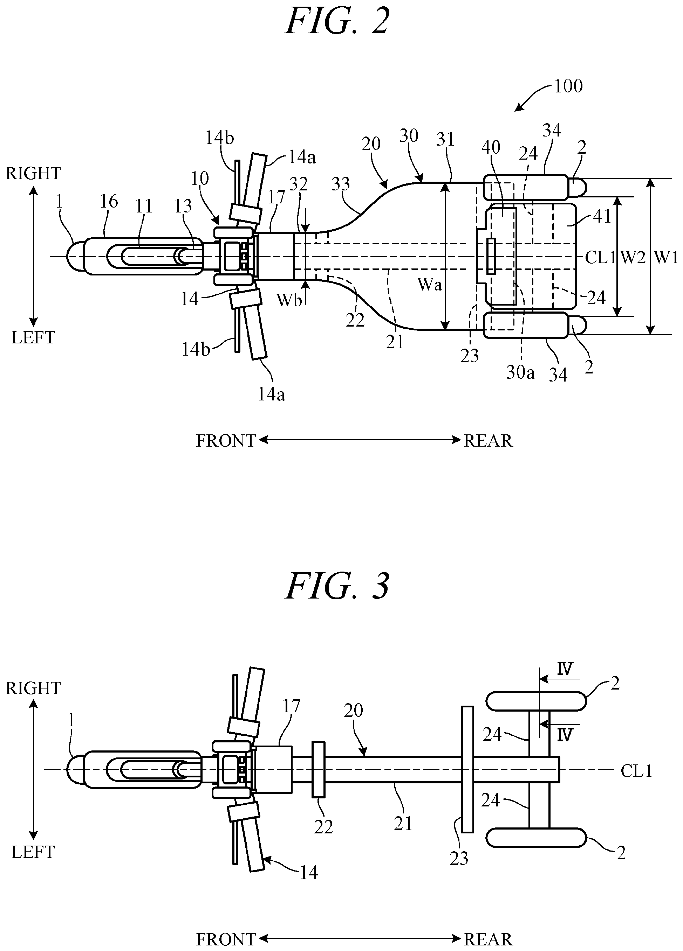

FIG. 1 and FIG. 2 are a side view and a plan view illustrating an overall configuration of a vehicle 100 according to the embodiment of the present invention, respectively, and show a traveling posture of the vehicle 100 when the vehicle is used, that is, a travelable posture. A non-traveling posture is referred to as a non-traveling posture. FIG. 1 also illustrates a use state of a user PS (two-dot chain line). Hereinafter, the front-rear direction (length direction), the left-right direction (width direction), and the up-down direction (height direction) of the vehicle 100 are defined as illustrated, and a configuration of each unit will be described according to this definition. FIG. 1 is a view of the vehicle 100 seen from the left, and FIG. 2 is a view of the vehicle 100 seen from above.

As illustrated in FIGs. 1 and 2, the vehicle 100 includes a front wheel 1 and rear wheels 2, and a frame FL included in a skeleton of the vehicle 100, and is entirely symmetric with respect to a center line CL1 (FIG. 2) passing through the center of the vehicle 100 in the left-right direction. More specifically, the front wheel 1 is arranged along the center line CL1, and the left and right rear wheels 2 are arranged at symmetrical positions across the center line CL1. The front wheel 1 has the same diameter as the rear wheels 2. The front wheel 1 may have a larger diameter or a smaller diameter than the rear wheels 2. The frame FL includes a front frame 10 and a rear frame 20.

The front frame 10 includes a vertical pipe 11 having a substantially rectangular cross section extending in the up-down direction and an inclined frame 12 extending rearward from the rear surface of the lower end portion of the vertical pipe 11. The vertical pipe 11 is inclined so that the upper end portion thereof is located rearward of the lower end portion thereof. More specifically, the inclined frame 12 is inclined so that the rear end portion thereof is located below the upper end of the front wheel 1 and the front end portion thereof is located above the upper end of the front wheel 1, and the front end portion of the inclined frame 12 is joined to the rear surface of the vertical pipe 11.

A through hole having a substantially cylindrical cross section is formed in the vertical pipe 11 over the up-down direction, and a handlebar shaft 13 having a substantially circular cross section is rotatably inserted into the through hole. The center portion of a handlebar 14 in the left-right direction is fixed to the upper end portion of the handlebar shaft 13, and a front fork 15 is fixed to the lower end portion of the handlebar shaft 13. The handlebar shaft 13 is supported so as to be movable vertically (expandable and contractible) with respect to the vertical pipe 11. Although not illustrated, a locking mechanism for fixing the height of the handlebar shaft 13 is provided at the upper end portion of the vertical pipe 11.

A rotary shaft 1a of the front wheel 1 is rotatably supported by the pair of left and right front forks 15. The front wheel 1 is steered by a turning operation (steering) of the handlebar 14. The handlebar 14 is a bar handle that extends substantially linearly in the left-right direction. A plastic or rubber grips 14a gripped by the user PS are provided at both left and right ends of the handlebar 14. A substantially arc-shaped front fender 16 is attached to the inner side of the pair of left and right front forks 15 so as to cover the periphery of the front wheel 1 from the upper side to the rear side of the front wheel 1.

Although not illustrated in detail, a traveling motor 4 (in-wheel motor) and a brake unit 5 are housed inside the front wheel 1. For example, the traveling motor 4 is arranged on the left side, and the brake unit 5 is arranged on the right side. The vehicle 100 is formed as an electric vehicle that travels by driving of the traveling motor 4. The brake unit 5 is formed as, for example, a drum brake unit included in a drum brake. Although not illustrated, the rear wheels 2 are similarly provided with the brake units. These brake units 5 are operated by an operation of brake levers 14b provided in front of the grips 14a of the handlebar 14, and a braking force is applied to the front wheel 1 and the rear wheels 2. The traveling motor 4 as an electric motor may be provided in the rear wheels 2 instead of the front wheel 1, or in both the front wheel 1 and the rear wheels 2. When the traveling motors are provided in both the front wheel 1 and the rear wheels 2, the towing ability and the climbing ability of the vehicle 100 can be improved.

Although not illustrated, the handlebar 14 is provided with a starter switch to instruct on/off of a main power supply, a blinker switch to notify of right/left turning, an accelerator lever to input a traveling command, and the like so as to be operable by the user. A display unit that displays vehicle information such as a remaining battery capacity and a set vehicle speed can also be provided at the handlebar 14. Below the handlebar 14, a pair of left and right blinker lamps that blink in response to an operation of the blinker switch is provided. A headlight is provided at the upper end portion of the vertical pipe 11.

The rear frame 20 includes a step 30 on which feet of the user PS are placed in the traveling position of the vehicle 100. A battery 40 is disposed behind the step 30. FIG. 3 is a plan view illustrating an overall configuration of the vehicle 100 in which the step 30 and the battery 40 are omitted. As illustrated in FIG. 3, the rear frame 20 includes a main frame 21 having a substantially rectangular cross section or a substantially circular cross section extending in the front-rear direction along the center line CL1, a pair of front and rear lateral frames 22 and 23 having a substantially rectangular cross section extending in the left-right direction across the main frame 21, and a pair of left and right support frames 24 extending in the left-right direction from the rear end portion of the main frame 21. These frames 21 to 24 are indicated by dotted lines in FIG. 2.

As illustrated in FIG. 1, on the upper surface of the main frame 21, two recessed portions 21a are formed in the left-right direction at front and rear portions thereof, and the lateral frames 22 and 23 are fitted into the recessed portions 21a and joined to the recessed portions 21a. As illustrated in FIG. 3, the length of the lateral frame 23 in the left-right direction is longer than the length of the lateral frame 22 in the left-right direction and is shorter than the distance between the left and right rear wheels 2. The upper surfaces of the lateral frames 22 and 23 are located on the same horizontal plane parallel to the road surface 101 (FIG. 1) and above the upper surface of the main frame 21. The upper surfaces of the lateral frames 22 and 23 may be located on the same plane as the upper surface of the main frame 21. The pair of left and right support frames 24 protrude from the left and right side surfaces of the main frame 21 in the left-right direction. A single support frame 24 may be provided so as to pass through the main frame 21.

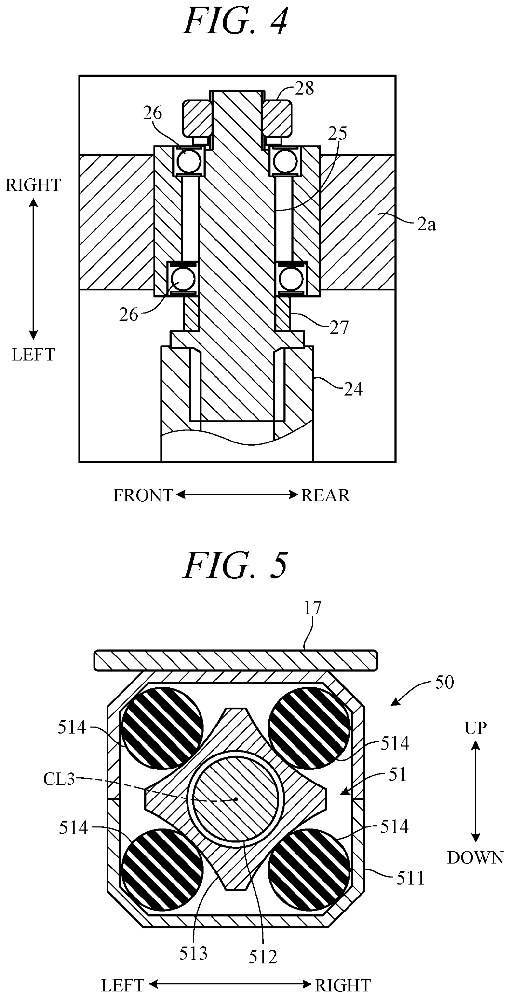

FIG. 4 is a cross sectional view illustrating a configuration of a mounting portion of the rear wheel 2, that is, a cross sectional view taken along line IV-IV of FIG. 3. As illustrated in FIG. 4, a shaft 25 is attached to a distal end portion of the support frame 24. A wheel 2a of the rear wheel 2 is rotatably supported on the shaft 25 via a pair of left and right bearings 26. A collar 27 having a substantially cylindrical shape is interposed between the support frame 24 and the bearing 26. A nut 28 is screwed to the distal end portion of the shaft 25 so as to restrain positions of the bearings 26.

As illustrated in FIG. 1, the front frame 10 further includes a base frame 17 behind the inclined frame 12. As illustrated in FIG. 2, the base frame 17 is a plate-like member having a substantially rectangular shape in a plan view, and the step 30 is disposed behind the base frame 17. The width (length in the left-right direction) of the base frame 17 is substantially equal to the width of the lateral frame 22. As illustrated in FIG. 1, a bracket 18 protruding upward and forward from the base frame 17 is provided at the front end portion of the base frame 17.

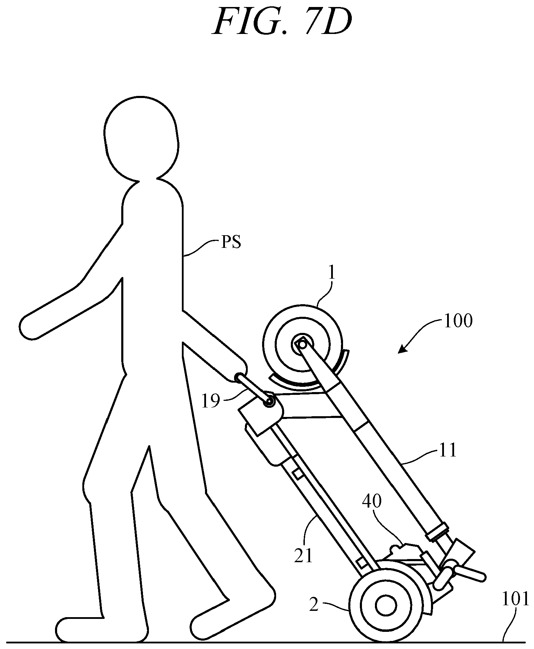

The rear end portion of the inclined frame 12 is rotatably supported at the bracket 18 arount an axial line CL2 extending in the left-right direction. As a result, the vehicle 100 can be folded, and the vehicle 100 can be easily carried in the folded condition (see FIG. 7D). Although not illustrated, the bracket 18 is provided with a locking mechanism that prevent the inclined frame 12 from rotating about the axial line CL2. Therefore, the vehicle 100 can be held in the traveling posture of FIG. 1.

The configuration of the step 30 will be described. As illustrated in FIGs. 1 and 2, the step (footrest) 30, which is a plate member having a substantially rectangular shape in a plan view and extends in the front-rear direction and the left-right direction, is mounted on the upper surfaces of the lateral frames 22 and 23. The step 30 is fixed to the lateral frames 22 and 23 by welding or the like, whereby both ends of the step 30 in the front-rear direction are supported by the lateral frames 22 and 23. The step 30 may also be mounted on the upper surface of the main frame 21, and the step 30 may be supported by the main frame 21 and the lateral frames 22 and 23. The step 30 functions as a placement part on which both feet of the user PS in a standing posture are placed. The upper surface (a placement surface) of step 30 is configured as a horizontal surface that is parallel to the road surface 101.

As illustrated in FIG. 2, the step 30 includes a rear step portion 31 extending forward from the rear end portion thereof with a constant width (length in the left-right direction), a front step portion 32 extending rearward from the front end portion thereof with a constant width, and an intermediate step portion 33 between the rear step portion 31 and the front step portion 32. The rear end 30a of the step 30 extends substantially linearly in the left-right direction. The length in the front-rear direction and the width in the left-right direction of the step 30 are defined such that the entire soles of the user PS can be placed.

According to the invention, the width Wa of the rear step portion 31 is shorter than the length W1 between the left and right outer end surfaces of the left and right rear wheels 2, and longer than the length W2 between the left and right inner end surfaces of the left and right rear wheels 2. The width Wb of the front step portion 32 is substantially equal to the width of the base frame 17 and is shorter than the width Wa of the rear step portion 31. The intermediate step portion 33 is formed in a substantially trapezoidal shape in a plan view so as to smoothly connect the front step portion 32 and the rear step portion 31. As a result, the width of the step 30 is gradually increased from the front to the rear.

By configuring the step 30 with a single plate member in this manner, the number of components can be reduced and the cost can be reduced, as compared with a case where the step is divided into the left and right. In addition, the area of the upper surface of the step 30 can be increased, and the degree of freedom in the place where the feet of the user PS are placed is improved. As illustrated in Fig. 1, the upper surface of the step 30 is located on the same horizontal plane as the upper surface of the base frame 17. Therefore, the user PS is able to easily move his/her soles from the upper surface of the step 30 to the upper surface of the base frame 17, and the range in which it is possible to place the soles extends.

As illustrated in Fig. 2, a pair of left and right rear fenders 34 are attached to the rear end portion of the step 30. The rear fender 34 is formed in a substantially arc shape so as to cover the circumference of the rear wheel 2 from the front side to the upper side and the rear side of the rear wheel 2. The length from the right end face of the right rear fender 34 to the left end face of the left rear fender 34 is shorter than the length from the right end portion to the left end portion of the handlebar 14, and the maximum width of the vehicle 100 is defined by the handlebar 14.

A holder 41 of the battery 40 is disposed on a rear side of the step 30. The holder 41 is formed in a substantially box shape with an opened front surface. More specifically, the holder 41 includes a bottom wall and a top wall facing each other and extending in a substantially horizontal direction, and a pair of left and right side walls and a rear wall standing upright between the bottom walls and the top wall. The bottom wall is mounted and supported on the upper surface of the rear end portion of the main frame 21 and the upper surface of the support frame 24.

The battery 40 having a substantially box shape is inserted into the holder 41 through an opening on the front surface, and the battery 40 is supported, accordingly. The upper surface of the bottom wall is formed to have a substantially identical height to that of the upper surface of the step 30. It is thus possible to easily accommodate the battery 40 in the holder 41 or easily remove the battery 40 from the holder 41, while sliding the battery 40 in the front-rear direction along the upper surface of the step 30. Although not illustrated, a terminal portion is provided on the rear wall of the holder 41, and a terminal portion of the battery 40 is connected to such a terminal portion, in an accommodated state of the battery 40.

The battery 40 is a secondary battery such as a lithium ion battery in which electric power supplied to the traveling motor 4 is stored, and the battery 40 is connected to the traveling motor 4 provided at the front wheel 1 via the terminal portion on the rear wall of the holder 41 and a power line passing through the main frame 21. Electric power supplied from the battery 40 to the traveling motor 4 is controlled by a power control unit (not illustrated). The battery 40 may be disposed behind or inside the vertical pipe 11, or may be disposed around other structural members.

As illustrated in FIG. 1, the front frame 10 and the rear frame 20 are connected via a swing portion 50. That is, the base frame 17 provided at the rear end portion of the front frame 10 and the main frame 21 provided at the front end portion of the rear frame 20 are connected to each other via the swing portion 50 so as to be swingable in the left-right direction. Hereinafter, the front side of the swing portion 50 of the vehicle 100 may be referred to as a first unit 100A, and the rear side thereof may be referred to as a second unit 100B. The first unit 100A includes the front wheel 1, the handlebar 14, and the like. The second unit 100B includes the rear wheels 2, step 30, and the like. The first unit 100A is provided to be swingable in the left-right direction with respect to the second unit 100B about a swing axial line CL3 extending in the front-rear direction.

The swing portion 50 includes a Neidhart rubber spring 51 fixed to a bottom surface of the base frame 17. FIG. 5 is a view illustrating a schematic configuration of the Neidhart rubber spring 51 provided in the swing portion 50. As illustrated in FIG. 5, the Neidhart rubber spring 51 is incorporated in a case 511 having a substantially rectangular frame shape in a cross section and fixed to the bottom surface of the base frame 17. In the case 511, a shaft 512 which is provided integrally with the main frame 21 of the rear frame 20 and has a substantially circular cross section extending along the axial line CL3, is disposed. The front end portion of the main frame 21 may be configured to have a substantially circular cross section, and this may be used as the shaft 512. The Neidhart rubber spring 51 includes a substantially rhombic cam block 513 spline-connected to the shaft 512 so as to be rotatable integrally with the shaft 512, and rubber rollers 514 disposed opposite to surfaces formed in a concave shape of the cam block 513. FIG. 5 corresponds to an initial state before swinging at the swing portion 50.

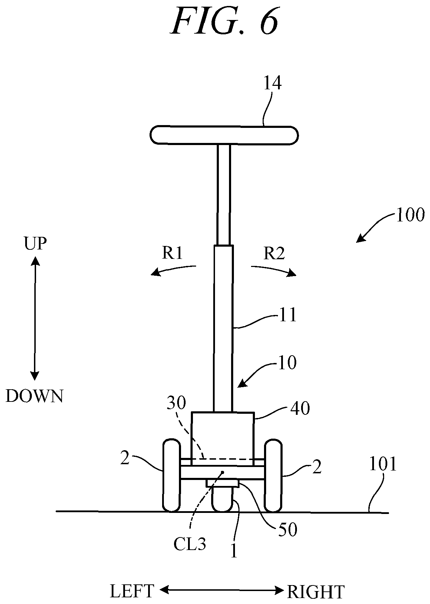

FIG. 6 is a view of the vehicle 100 seen from behind, and is a view corresponding to the initial state before swinging. FIG. 6 illustrates a configuration of the vehicle 100 in a simple manner. As illustrated in FIG. 6, in the initial state, the vertical pipe 11 extends substantially perpendicularly to the road surface 101. The posture of the vehicle 100 in this case is referred to as a reference posture.

When torque acts on the case 511 of the swing portion 50 in FIG. 5 from this initial state and the case 511 rotates about the axial line CL3, the rubber roller 514 is pressed and elastically deformed between the case 511 and the cam block 513, and the rubber roller 514 becomes elliptical. At this time, the front frame 10 shown in FIG. 6 (the first unit 100A) swings in the left-right direction (arrow R1 or R2 direction) with respect to the step 30 (the second unit 100B) around the axial line CL3, and the vertical pipe 11 is inclined with respect to the road surface 101. As a result, the vehicle 100 takes an inclined posture. In this case, as a rotation angle of the case 511 around the axial line CL3 increases, a rotational resistance to the case 511 increases. When the torque acting on the case 511 becomes zero, the rubber roller 514 returns to the original shape by the elastic force, and the front frame 10 returns to the reference posture in FIG. 6.

As described above, by providing the front frame 10 so as to be swingable via the swing portion 50, the user PS riding on the vehicle 100 in a standing posture can easily turn the vehicle 100 in the left-right direction. For example, when turning the vehicle 100 in the left-right direction, the user slightly bends the knees and the ankles and inclines the upper body to the left or right. As a result, the vertical pipe 11 can be swung together with the base frame 17 in a stable posture with both feet placed on the step 30 while the step 30 integrated with the rear frame 20 is kept horizontal, and the front wheel 1 can be inclined to the left and right. As a result, the vehicle 100 can be smoothly turned, and the turning performance is improved.

In addition, since the Neidhart rubber spring 51 is provided in the swing portion 50, when the front frame 10 (base frame 17) is swung to the left and right from the reference posture, a restoring force acts on the front frame 10, and swinging of the front frame 10 can be favorably suppressed. The cam block 513 may be formed not in a quadrangular shape but in another polygonal shape (for example, a triangular shape). Instead of forming all surfaces of the cam block 513 in a concave shape, for example, two surfaces may be formed in a concave shape, and the rubber rollers 514 may be disposed to face these concave surfaces. The restoring force may be acted on the front frame 10 by using an elastic member such as a coil spring instead of the Neidhart rubber spring 51. That is, the configuration of a damper member is not limited to the Neidhart rubber spring 51.

Although not illustrated, a load point (a center point of a load acting from a sole) acting on the step 30 by a weight of the user in a standing posture is located in a triangular region connecting a grounding point of the front wheel 1 and the grounding points of the pair of left and right rear wheels 2 in a plan view. Thus, the user can ride on the vehicle 100 in a stable posture during both traveling and stopping.

As illustrated in FIG. 1, the swing portion 50 is disposed below the step 30, and the axial line CL3 of the swinging extends in the front-rear direction below the step 30. Therefore, although the swing portion 50 is provided, the step 30 can be easily formed in a large size. Further, since the swing portion 50 is hidden from the view of the user PS standing on the step 30, an appearance of the vehicle 100 is good.

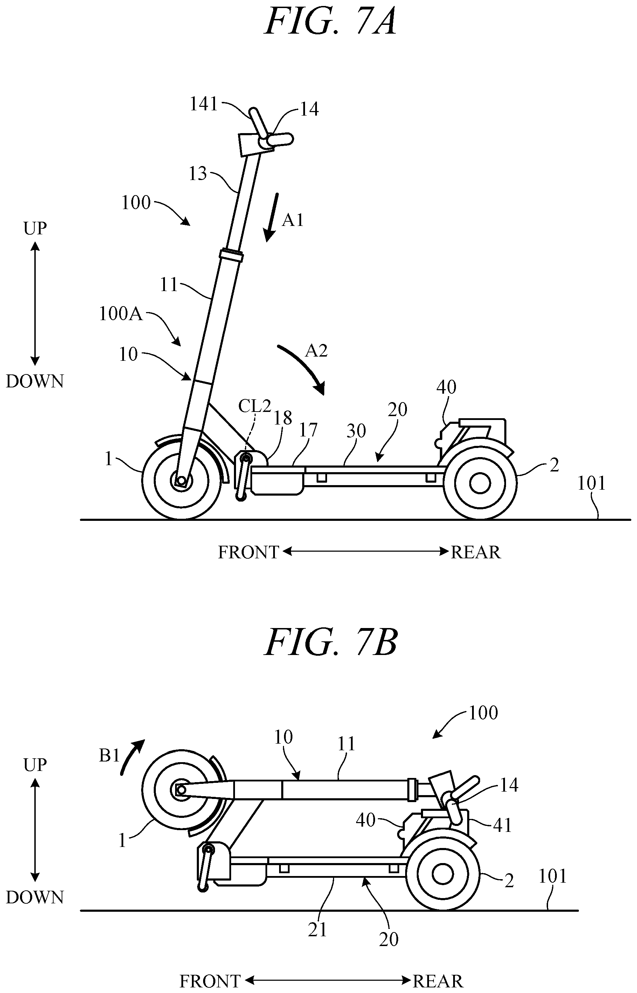

As described above, the vehicle 100 according to the present embodiment is provided to be foldable with the axial line CL2 of the bracket 18 of the front frame 10 as the center. FIGs. 7A to 7D are diagrams illustrating an example of a posture change from a traveling posture of the vehicle 100. The front-rear direction, the left-right direction, and the up-down direction in FIGs. 7A to 7C conform to the directions illustrated in FIGs. 1 and 2. A folded posture is included in the non-traveling posture of the vehicle 100.

When folding the vehicle 100 from the traveling posture, first, as indicated by an arrow A1 in FIG. 7A, the locking mechanism of the handlebar shaft 13 is released to retract the handlebar shaft 13 into the vertical pipe 11 to the maximum. Next, the locking mechanism of the bracket 18 is released, and the front frame 10 on a front side relative to the bracket 18, that is, a part of the first unit 100A excluding the base frame 17 is caused to rotate rearward around the axial line CL2 as indicated by an arrow A2. Consequently, the vehicle 100 is folded as illustrated in Fig. 7B. In the folded posture in which the front frame 10 has rotated rearward to the maximum, the handlebar 14 abuts the upper surface of the top wall of the holder 41. In this state, the vertical pipe 11 and the main frame 21 are substantially parallel to each other, and the battery 40 is disposed between the front and rear frames 10 and 20.

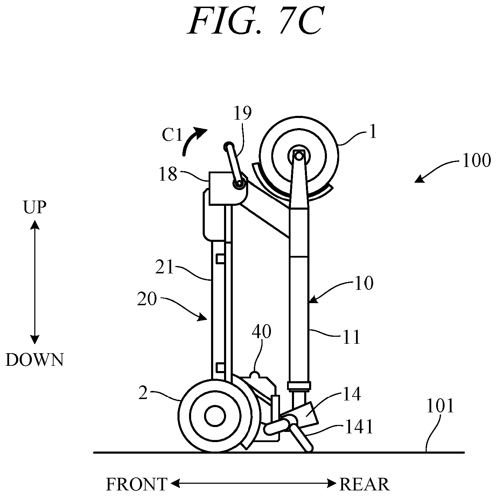

Furthermore, as indicated by an arrow B1 in FIG. 7B, the front wheel 1 is lifted upward with the rear wheels 2 as a fulcrum. Accordingly, as illustrated in FIG. 7C, the main frame 21 stands up, so that the vehicle 100 can be made to stand up. In this situation, the pair of left and right rear wheels 2 and a pair of left and right protrusion portions 141 provided on the handlebar 14 make contact with the road surface 101. Accordingly, the vehicle 100 is capable of stably standing by itself on at least three points (for example, four points). The bracket 18 is provided with a handle 19 so as to be rotatable coaxially with the axial line CL2. When carrying the vehicle 100 from the state of FIG. 7C, the handle 19 is rotated upward as indicated by an arrow C1 in FIG. 7C, and the user PS grips the handle 19. In such a state, as illustrated in FIG. 7D, the vehicle 100 is inclined forward with the rear wheels 2 as a fulcrum. Thus, it becomes possible to easily carry the vehicle 100, while rolling the rear wheels 2 on the road surface 101.

According to the present embodiment, the following operations and effects are achievable.
(1) The vehicle 100 according to the present embodiment includes: the first unit 100A including the single front wheel 1 and the handlebar 14 disposed above the front wheel 1; the second unit 100B including the pair of left and right rear wheels 2 and the step 30 (a placement part) on which feet of an occupant are placed; and the swing portion 50 (a connecting part) that connects the first unit 100A and the second unit 100B to be swingable in the left-right direction with the swing axial line CL3 extending in the front-rear direction as the center (FIG. 1). The step 30 includes the single plate member extending in the substantially horizontal direction and having the rear end 30a extending in the left-right direction (FIG. 2). Consequently, the number of components can be reduced and the cost can be reduced, as compared with the case where the step is divided into the left and right. In addition, the area of the step 30 can be easily enlarged.
(2) The second unit 100B includes the support frame 24 which supports the pair of left and right rear wheels 2 to be rotatable (FIG. 3). The rear end portion of the step 30 is supported by the lateral frame 23 integrally connected with the support frame 24 via the main frame 21 (FIG. 2). This enables firmly supporting the step 30 in the vicinity of the rear wheels 2. That is, the step 30 is provided not to swing with respect to the rear wheels 2, and thus the step 30 can be firmly supported integrally with a rear wheel support member.
(3) The second unit 100B includes the main frame 21 extending in the substantially front-rear direction and the support frame 24 intersecting the rear end portion of the main frame 21 and extending in the left-right direction (FIG. 3). Therefore, the configuration of the support frame 24 that supports the left and right rear wheels 2 to be rotatable can be simplified, and the number of components and cost can be reduced. In addition, the rigidity of the support frame 24 is increased, and the rear wheels 2 can be firmly supported.
(4) The first unit 100A includes the base frame 17 disposed on a front side of the step 30 and having the upper surface extending in the substantially horizontal direction (FIGs. 1 and 2). The upper surface of the step 30 and the upper surface of the base frame 17 extend on a substantially same plane (FIG. 1). This enables the user PS to easily move the soles from the step 30 to the upper surface of the base frame 17, and the placement space of the soles increases.
(5) The axial line CL3 of the swing portion 50 is located below the step 30 (FIG. 1). This easily enables an increase in size of the step 30 without interfering with the swing portion 50. In addition, since the swing portion 50 is hidden from the view of the user PS who is standing on the step 30, the vehicle 100 has a good appearance.
(6) The swing portion 50 is disposed on a front side of the step 30. Accordingly, the first unit 100A and the second unit 100B are separated on the front side of the step 30, and the first unit 100A (the front wheel 1 and the like) of the vehicle 100 can be swung satisfactorily in the left-right direction on the front side of the step 30.
(7) The step 30 is disposed on a front side of the left and right rear wheels 2. Therefore, an increase in the vehicle width can be suppressed, as compared with a case where the step is provided on an inner side of the left and right rear wheels 2. As a result, the vehicle width can be reduced, and traveling or the like in a narrow passage is easily enabled.

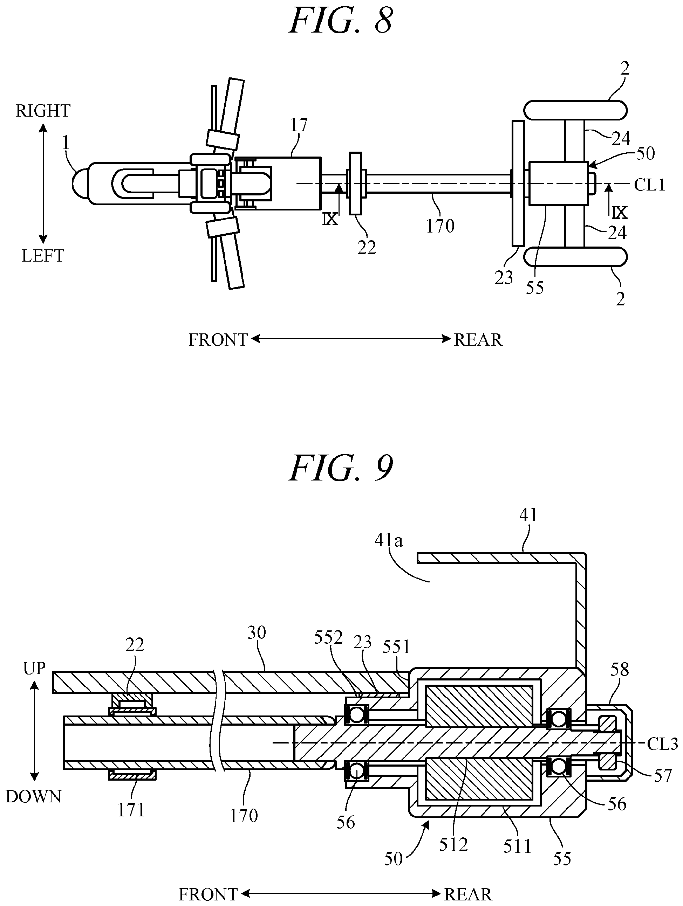

The above embodiments can be changed in various forms. Hereinafter, modified examples will be described. In the above embodiments, the swing portion 50 is disposed on a front side of the step 30, but the swing portion 50 may be disposed in a not-claimed example on a rear side relative to a front end of the step 30. FIG. 8 is a plan view of the vehicle 100 illustrating a not-claimed example, and FIG. 9 is a cross sectional view taken along line IX-IX of Fig. 8. In FIG. 8, similarly to FIG. 3, illustration of the step 30, the battery 40, and the like is omitted.

As illustrated in FIG. 8, the swing portion 50 is disposed between the left and right rear wheels 2, instead of below the base frame 17, more specifically, on a rear side relative to front end portions of the rear wheels 2. A front end portion of the main frame 170 extending in the front-rear direction along the center line CL1 is fixed to the base frame 17. Therefore, the main frame 170 is included in the front frame 10 integrated with the base frame 17. As illustrated in FIG. 9, a shaft 512 of the swing portion 50 is joined with a rear end portion of the main frame 170, and the shaft 512 and the main frame 170 integrally rotate around the axial line CL3.

The swing portion 50 is surrounded by a case frame 55 having a substantially box shape, and a case 511 (Fig. 5) of the swing portion 50 is accommodated inside the case frame 55. The case 511 is provided integrally with the case frame 55. The shaft 512 penetrates through the case frame 55 in the front-rear direction, and in addition, is rotatably supported by the case frame 55 by a pair of front and rear bearings 56. A nut 57 is screwed into a rear end portion of the shaft 512. A cover 58 is attached to a rear end surface of the case frame 55 so as to cover the nut 57. As illustrated in FIG. 8, the support frame 24 protrudes in the left-right direction from the left and right side surfaces of the case frame 55, and is provided integrally with the case frame 55.

The case frame 55 is formed in a stepped shape such that the front side is narrower, and the lateral frame 23 is mounted and joined onto the upper surface of a narrowed portion 552 on the front side of a step portion 551. The front lateral frame 22 is rotatably supported by an outer peripheral surface of the main frame 170 via a sliding bearing 171. Accordingly, the pair of front and rear lateral frames 22 and 23 become capable of rotating with respect to the main frame 170, and the main frame 170 becomes capable of rotating relatively to the step 30. The swing portion 50 is provided on a rear side relative to the front end portions of the rear wheels 2 in this manner, so that the swing portion 50 can be disposed at a higher position than that of a case where the swing portion 50 is disposed below the base frame 17 (FIG. 1). Therefore, when the vehicle 100 moves over a step or the like, it is possible to avoid the swing portion 50 from colliding with the step.

The rear end portion of the step 30 abuts the step portion 551. The holder 41 is fixed to the case frame 55. The case frame 55 is formed such that the upper surface thereof is located on the same surface as the upper surface of the step 30. Therefore, the battery 40 can be easily accommodated in the holder 41 through the opening 41a on the front side of the holder 41 while sliding on the upper surface of the step 30.

In the above embodiment, the members on the front side of the swing portion 50, that is, the front wheel 1 and the front frame 10 (the vertical pipe 11, the handlebar 14, the base frame 17, and the like) are configured as the first unit 100A, but the configuration of a first unit is not limited to the above configuration as long as it has a single front wheel and a steering part disposed above the front wheel. In the above embodiment (FIGs. 1 to 7D), the members on the rear side of the swing portion 50, that is, the rear wheels 2 and the rear frame 20 (the main frame 21, the support frame 24, the step 30, and the like) are configured as the second unit 100B, but the configuration of a second unit is not limited to the above configuration as long as it has a pair of left and right rear wheels and a placement part on which the feet of an occupant are placed. In the above embodiment, the first unit 100A and the second unit 100B is swingably connected in the left-right direction via the swing portion 50. However, as long as a first unit and a second unit is swingably connected in the left-right direction, a connecting part may be any configuration.

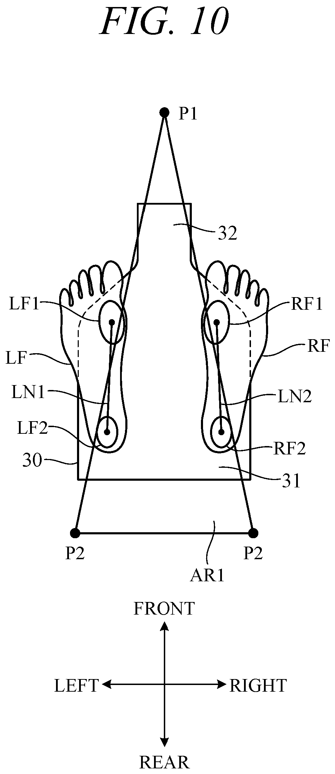

In the above embodiment, the step 30 is formed so as to have the front step portion 32, the rear step portion 31 and the intermediate step portion 33. Consequently, the following effects are obtained. FIG. 10 is a plan view illustrating schematically an arrangement of the feet on the step 30 of the occupant while riding. In FIG. 10, a grounding point P1 of the front wheel 1 and grounding points P2 of the pair of left and right rear wheels 2 are also illustrated.

As illustrated in Fig. 10, balls of feet LF1 and RF1 and calcaneus bones LF2 and RF2 of both the left and right feet of the occupant are placed on the step 30 while riding. Accordingly, the occupant easily inclines his/her body at the time of cornering. That is, since toe parts do not abut the step 30, it is possible to incline his/her body with a line connecting the heel and the ball of foot as an axis, without twisting his/her ankle largely. In addition, the occupant is able to take a stable upright posture on the step 30 without an increase in size of the step 30. Since it is no longer necessary to increase the size of the step 30, the cost can be reduced. In particular, in the present embodiment, the step 30 includes the rear step portion 31 (a first placement portion) having a predetermined width Wa (a first predetermined width) in the left-right direction, and the front step portion 32 (a second placement portion) having a predetermined width Wb (a second predetermined width) shorter than Wa (see FIG. 2). Therefore, as illustrated in FIG. 10, in a general riding posture of the occupant, a half or more the length of line segments LN1 and LN2 respectively connecting the centers of the balls of feet LF1 and RF1 of the occupant and the centers of the calcaneus bones LF2 and RF2 is included in an area AR1 formed by connecting the grounding point P1 of the front wheel 1 and the grounding points P2 of the respective left and right rear wheels 2, in a plan view. Therefore, the center of gravity of the occupant is always located inside the area AR1, and thus the vehicle posture is stabilized.

From a viewpoint of enlarging a space for placing the user's feet, the step is configured such that the rear end thereof extends in the left-right direction. In the above embodiment, the rear wheels 2 are rotatably supported by the support frame 24 (a second frame) extending in the left-right direction and crossing with the rear end portion of the main frame 21 (a first frame) extending in the front-rear direction, but the configuration of a support portion is not limited to the above configuration. In the above embodiment, the rear end portion of the step 30 is supported by a connecting portion connected to the support frame 24, that is, the main frame 21 or the lateral frame 23, but may be supported by the support frame 24.

In the above embodiment, the base frame 17 which is a part of the first unit 100A is disposed in front of the step 30, but the configuration of a horizontal portion is not limited to the above configuration. The upper surface of the step 30 and the upper surface of the base frame 17 may not be on the same plane. In the above embodiment, the axial line CL3 of the swing portion 50 is positioned below the step 30, but the arrangement of a swing axial line is not limited to the above arrangement.

The scope of the invention is defined by the appended claims.

### REFERENCE SIGNS LIST

1 front wheel, 2 rear wheel, 14 handlebar, 17 base frame, 21 main frame, 23 lateral frame, 24 support frame, 30 step, 50 swing portion, 100 vehicle, 100A first unit, 100B second unit.

## Claims

1. A vehicle (100), comprising:
a first unit (100A) including a single front wheel (1) and a steering part (14) arranged above the front wheel (1) to be operated by an occupant in a standing posture;
a second unit (100B) including a pair of left and right rear wheels (2, 2) and a placement part (30) on which the feet of the occupant are placed; and
a connecting part (50) configured to connect the first unit (100A) and the second unit (100B) swingably in a left-right direction about a swing axial line (CL3) extending in a front-rear direction, wherein
the placement part (30) is configured by a single plate member extending in a substantially horizontal direction and having a rear end (30a) extending substantially linearly in the left-right direction,
the connecting part (50) is disposed in front of the placement part (30), and
the length in the front-rear direction and the width in the left-right direction of the placement part (30) are defined such that the entire soles of the occupant can be placed,
**characterized in that**
the placement part (30) includes a rear step portion (31) extending forward from the rear end (30a) thereof with a constant width in the left-right direction, a front step portion (32) extending rearward from the front end thereof with a constant width in the left-right direction, and an intermediate step portion (33) between the rear step portion (31) and the front step portion (32),
the width (Wa) in the left-right direction of the rear step portion (31) of the placement part (30) is shorter than a length (W1) between left and right outer end surfaces of the pair of left and right rear wheels (2, 2), and longer than a length (W2) between left and right inner end surfaces of the pair of left and right rear wheels (2, 2),
the width (Wb) in the left-right direction of the front step portion (32) is shorter than the width (Wa) in the left-right direction of the rear step portion (31),
the intermediate step portion (33) is formed in a substantially trapezoidal shape in a plan view so as to smoothly connect the front step portion (32) and the rear step portion (31).

2. The vehicle according to claim 1, wherein:
the second unit (100B) includes a support portion (24) supporting rotatably the pair of left and right rear wheels (2, 2), and
the rear step portion (31) of the placement part (30) is supported by the support portion (24) or a connecting portion (21, 23) connected to the support portion (24).

3. The vehicle according to claim 2, wherein:
the second unit (100B) includes a first frame (21) extending in the front-rear direction and a second frame (24) extending in the left-right direction so as to intersect with a rear end portion of the first frame (21), and
the second frame (24) includes the support portion.

4. The vehicle according to any one of claims 1 to 3, wherein
the first unit (100A) includes a horizontal portion (17) disposed in front of the placement part (30) and having an upper surface extending in a substantially horizontal direction, and
an upper surface of the placement part (30) and the upper surface of the horizontal portion (17) extend on a substantially same plane.

5. The vehicle according to any one of claims 1 to 4, wherein the swing axial line (CL3) is located below the placement part (30).

## Patentansprüche

1. Fahrzeug (100), umfassend:
eine erste Einheit (100A), welche ein einzelnes Vorderrad (1) und einen Lenkteil (14) umfasst, welcher oberhalb des Vorderrads (1) angeordnet ist, um durch einen Insassen in einer Stehposition betätigt zu werden;
eine zweite Einheit (100B), welche ein Paar eines linken und eines rechten Hinterrads (2, 2) und einen Platzierungsteil (30) umfasst, auf welchem die Füße des Insassen platziert werden; und
einen Verbindungsteil (50), welcher dazu eingerichtet ist, die erste Einheit (100A) und die zweite Einheit (100B) schwenkbar in einer Links-Rechts-Richtung um eine Schwenkaxiallinie (CL3), welche sich in einer Vorne-Hinten-Richtung erstreckt, zu verbinden, wobei
der Platzierungsteil (30) durch ein einzelnes Plattenelement eingerichtet ist, welches sich in einer im Wesentlichen horizontalen Richtung erstreckt und ein hinteres Ende (30a) aufweist, welches sich im Wesentlichen linear in der Links-Rechts-Richtung erstreckt,
der Verbindungsteil (50) vor dem Platzierungsteil (30) angeordnet ist und
die Länge in der Vorne-Hinten-Richtung und die Breite in der Links-Rechts-Richtung des Platzierungsteils (30) derart definiert sind, dass die gesamten Fußsohlen des Insassen platziert werden können,
**dadurch gekennzeichnet, dass**
der Platzierungsteil (30) einen hinteren Stufenabschnitt (31), welcher sich von dem hinteren Ende (30a) davon mit einer konstanten Breite in der Links-Rechts-Richtung nach vorne erstreckt, einen vorderen Stufenabschnitt (32), welcher sich von dem vorderen Ende davon mit einer konstanten Breite in der Links-Rechts-Richtung nach hinten erstreckt, und einen mittleren Stufenabschnitt (33) zwischen dem hinteren Stufenabschnitt (31) und dem vorderen Stufenabschnitt (32) umfasst,
die Breite (Wa) in der Links-Rechts-Richtung des hinteren Stufenabschnitts (31) des Platzierungsteils (30) kürzer als eine Länge (W1) zwischen einer linken und einer rechten äußeren Endfläche des Paars eines linken und eines rechten Hinterrads (2, 2) und länger als eine Länge (W2) zwischen einer linken und einer rechten inneren Endfläche des Paars eines linken und eines rechten Hinterrads (2, 2) ist,
die Breite (Wb) in der Links-Rechts-Richtung des vorderen Stufenabschnitts (32) kürzer als die Breite (Wa) in der Links-Rechts-Richtung des hinteren Stufenabschnitts (31) ist,
der mittlere Stufenabschnitt (33) in einer Draufsicht in einer im Wesentlichen trapezförmigen Form gebildet ist, sodass er den vorderen Stufenabschnitt (32) und den hinteren Stufenabschnitt (31) nahtlos verbindet.

2. Fahrzeug nach Anspruch 1, wobei:
die zweite Einheit (100B) einen Halterungsabschnitt (24) umfasst, welcher das Paar eines linken und eines rechten Hinterrads (2, 2) drehbar haltert, und
der hintere Stufenabschnitt (31) des Platzierungsteils (30) durch den Halterungsabschnitt (24) oder einen Verbindungsabschnitt (21, 23), welcher mit dem Halterungsabschnitt (24) verbunden ist, gehaltert ist.

3. Fahrzeug nach Anspruch 2, wobei:
die zweite Einheit (100B) einen ersten Rahmen (21), welcher sich in der Vorne-Hinten-Richtung erstreckt, und einen zweiten Rahmen (24) umfasst, welcher sich in der Links-Rechts-Richtung erstreckt, sodass er einen hinteren Endabschnitt des ersten Rahmens (21) schneidet, und
der zweite Rahmen (24) den Halterungsabschnitt umfasst.

4. Fahrzeug nach einem der Ansprüche 1 bis 3, wobei
die erste Einheit (100A) einen horizontalen Abschnitt (17) umfasst, welcher vor dem Platzierungsteil (30) angeordnet ist und eine obere Fläche aufweist, welche sich in einer im Wesentlichen horizontalen Richtung erstreckt, und
eine obere Fläche des Platzierungsteils (30) und die obere Fläche des horizontalen Abschnitts (17) sich auf einer im Wesentlichen gleichen Ebene erstrecken.

5. Fahrzeug nach einem der Ansprüche 1 bis 4, wobei die Schwenkaxiallinie (CL3) unterhalb des Platzierungsteils (30) angeordnet ist.

## Revendications

1. Véhicule (100) comprenant:
une première unité (100A) incluant une roue avant unique (1) et une partie de direction (14) disposée au-dessus de la roue avant (1) pour être actionnée par un occupant dans une posture debout;
une seconde unité (100B) incluant une paire de roues arrière gauche et droite (2, 2) et une partie de positionnement (30) sur laquelle les pieds de l'occupant sont positionnés; et
une partie de liaison (50) configurée pour relier la première unité (100A) et la seconde unité (100B) de manière pivotante dans une direction gauche-droite autour d'une ligne axiale de pivotement (CL3) s'étendant dans une direction avant-arrière, dans lequel
la partie de positionnement (30) est configurée par un élément de plaque unique s'étendant dans une direction sensiblement horizontale et ayant une extrémité arrière (30a) s'étendant sensiblement linéairement dans la direction gauche-droite,
la partie de liaison (50) est disposée devant la partie de positionnement (30), et la longueur dans la direction avant-arrière et la largeur dans la direction gauche-droite de la partie de positionnement (30) sont définies de telle sorte que les semelles entières de l'occupant peuvent être positionnées,
**caractérisé en ce que**
la partie de positionnement (30) inclut une partie de pose de pied arrière (31) s'étendant vers l'avant à partir de son extrémité arrière (30a) avec une largeur constante dans la direction gauche-droite, une partie de pose de pied avant (32) s'étendant vers l'arrière à partir de son extrémité avant avec une largeur constante dans la direction gauche-droite, et une partie de pose de pied intermédiaire (33) entre la partie de pose de pied arrière (31) et la partie de pose de pied avant (32),
la largeur (Wa) dans la direction gauche-droite de la partie de pose de pied arrière (31) de la partie de positionnement (30) est plus courte qu'une longueur (W1) entre les surfaces d'extrémité extérieures gauche et droite de la paire de roues arrière gauche et droite (2, 2), et plus longue qu'une longueur (W2) entre les surfaces d'extrémité intérieures gauche et droite de la paire de roues arrière gauche et droite (2, 2),
la largeur (Wb) dans la direction gauche-droite de la partie de pose de pied avant (32) est plus courte que la largeur (Wa) dans la direction gauche-droite de la partie de pose de pied arrière (31),
la partie de pose de pied intermédiaire (33) présente, en vue de dessus, une forme sensiblement trapézoïdale de manière à relier régulièrement la partie de pose de pied avant (32) et la partie de pose de pied arrière (31).

2. Véhicule selon la revendication 1, dans lequel:
la seconde unité (100B) inclut une partie de support (24) supportant en rotation la paire de roues arrière gauche et droite (2, 2), et
la partie de pose de pied arrière (31) de la partie de positionnement (30) est supportée par la partie de support (24) ou une partie de liaison (21, 23) reliée à la partie de support (24).

3. Véhicule selon la revendication 2, dans lequel:
la seconde unité (100B) inclut un premier cadre (21) s'étendant dans la direction avant-arrière et un second cadre (24) s'étendant dans la direction gauche-droite de manière à couper une partie d'extrémité arrière du premier cadre (21), et
le second cadre (24) inclut la partie de support.

4. Véhicule selon l'une quelconque des revendications 1 à 3, dans lequel
la première unité (100A) inclut une partie horizontale (17) disposée devant la partie de positionnement (30) et ayant une surface supérieure s'étendant dans une direction sensiblement horizontale, et
une surface supérieure de la partie de positionnement (30) et la surface supérieure de la partie horizontale (17) s'étendent sensiblement dans un même plan.

5. Véhicule selon l'une quelconque des revendications 1 à 4, dans lequel la ligne axiale de pivotement (CL3) est située sous la partie de positionnement (30).
